# EUROPEAN PATENT APPLICATION

(11) **EP 1 853 060 A1**
(43) Date of publication of application: **07.11.2007**
(21) Application number: 06255237.7
(22) Date of filing: 11.10.2006
(51) Int. Cl.: H04N 5/44

(54) **Method for scaling and cropping images for television display**

(30) Priority: 04.05.2006 US 418983
(71) Applicant: Syntax Brillian Corp., Tempe AZ 85281 (US)
(72) Inventor: Miller, Sameul, Chino Hills, California 91709 (US)
(74) Representative: Kenrick, Mark Lloyd

(57) **Abstract**

A method of processing an image for display on a television screen is described. Unlike conventional method which over-expands the image, the method described herein crops the image (optionally) and scales it to fit the native resolution of the display screen without over-expanding the image. The method includes the steps of receiving a source television image having a native image resolution, scaling the source television image using a scaling ratio to produce a scaled television image having a resolution equal to or less than the native screen resolution in both a vertical and a horizontal direction, and displaying the scaled television image on the television screen. The scaling ratio may be the same or different in the vertical and horizontal directions.

## Description

### BACKGROUND OF THE INVENTION

### Field of the Invention

This invention relates to methods of processing images for display on a television screen, and in particular, it relates to a method of scaling and cropping images from a broadcast or other source for display on a flat panel display.

### Description of the Related Art

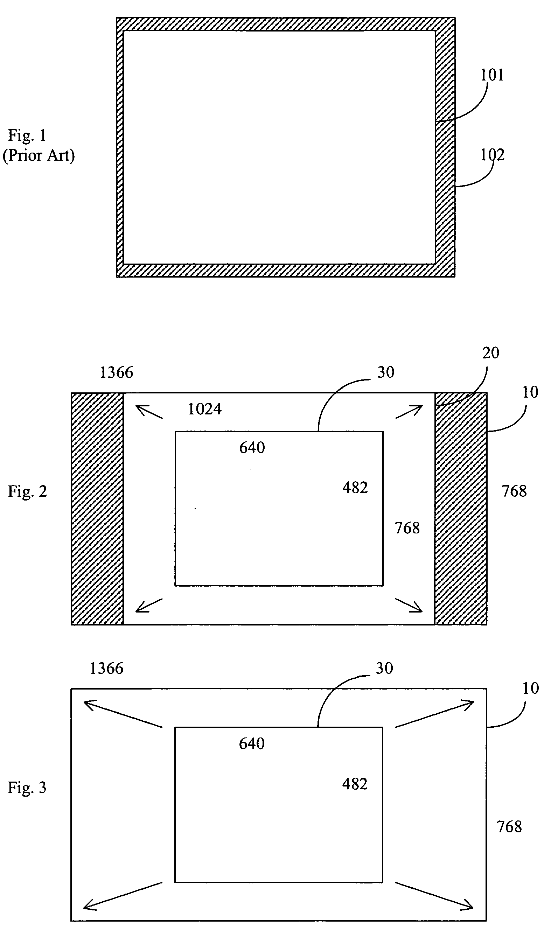

In a conventional television device using a cathode ray tube (CRT) display, the images formed on the CRT are affected by the Earth's magnetic field. The magnetic field shifts and distorts the image and does so in a non-uniform way depending on the physical location of the television device on the Earth and orientation of the television device relative to the Earth's magnetic field. If the displayed image has the same physical size as the active image area of the CRT (i.e. the area that displays the image and is visible to the viewer), then image shift and distortion will cause some areas along the edges of the CRT to be blank, making the distortion very visible to the viewer. To solve this problem, a conventional television device over-expands the image such that the physical size of the image (the picture area) is larger than the active image area of the CRT. This effectively assures that there are never any blank areas at the edges of the CRT's active image area effectively hiding the image shifting and distortion from the viewer. As illustrated in Fig. 1, the picture area 102 resulting from the over-expansion is larger than the active image area 101 and the shaded area around the edge of the picture area is not visible. Thus, even when the picture area is shifted (Fig. 1 illustrates the displayed picture area being shifted to the left), the active image area 101 is completely filled and has no blank areas. Under the conventional NTSC (National Television System Committee) standard design practice, the picture is over-expanded on each edge by approximately 10%, and in actual television devices the range of expansion is approximately 5% to 15%. Under the ATSC (Advanced Television Systems Committee) digital television standard design practice, the over-expansion is 2.5%, and in actual digital television devices the range of over-expansion is 2% to 10%.

### SUMMARY OF THE INVENTION

Modem television devices based on such technologies as Direct View Plasma, Liquid Crystal Display (LCD), Organic Light Emitting Diodes (OLED) devices and Rear Projection Digital Light Processing (DLP), High Temperature PolySilicon (HTPS), and Liquid Crystal on Silicon (LCoS) are not affected by the Earth's magnetic field. However, image over-expansion continues to be used in these display technologies, preventing the viewer from seeing the whole image and distorting the image. These devices all have fixed resolutions, with a fixed number of lines and a fixed number of pixels per line. Applying the overexpansion principle to television devices based on the conventional technologies has the following undesirable results: removal of up to 36% of the transmitted image (based on 10% overexpansion per edge) and distorting the image (removal of fine image detail and addition of artifacts not present in the original image) due to the close ratio scaling (typically 2.5% to 10% per edge) necessary for the overexpansion. The smaller the overexpansion percentage, the more damage is done to the image.

The present invention is directed to a method of processing television images that substantially obviate one or more of the problems due to limitations and disadvantages of the

### related art.

Additional features and advantages of the invention will be set forth in the descriptions that follow and in part will be apparent from the description, or may be learned by practice of the invention. The objectives and other advantages of the invention will be realized and attained by the structure particularly pointed out in the written description and claims thereof as well as the appended drawings.

To achieve these and other advantages and in accordance with the purpose of the present invention, as embodied and broadly described, the present invention provides a method of processing an image for display on a television screen having a native screen resolution, which includes: receiving a source television image having a native image resolution, scaling the source television image using a scaling ratio to produce a scaled television image having a resolution equal to or less than the native screen resolution in both a vertical and a horizontal direction, and displaying the scaled television image on the television screen. The scaling ratio may be the same or different in the vertical and horizontal directions. The method may further include cropping the source television image before scaling it.

It is to be understood that both the foregoing general description and the following detailed description are exemplary and explanatory and are intended to provide further explanation of the invention as claimed.

### BRIEF DESCRIPTION OF THE DRAWINGS

Figure 1 illustrates a conventional over-expansion method.

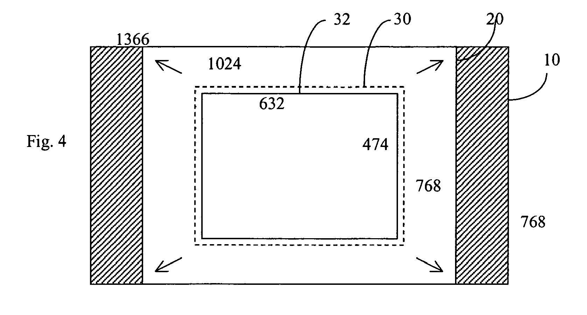

Figures 2-4 illustrate scaling methods according to embodiments of the present invention.

### DETAILED DESCRIPTION OF THE PREFERRED EMBODIMENTS

According to embodiments of the present invention, the television device does not over-expand the television image from the television broadcast or another source such as a DVD player (hereinafter referred to as the source television image or the source image). Instead, it either scales the source image using its full resolution, or crops the source image and then scales it. The descriptions below give a number of examples of the scaling and cropping method for a display panel having a native screen resolution of 1366 x 768 pixels.

In a first scaling example, schematically illustrated in Fig. 2, the source image is an image defined by the NTSC standard and has a native image resolution of 640 x 482 pixels (area 30). The source image is scaled (expanded) to a size of 1024 x 768 pixels (area 20), which preserves the aspect ratio of the source image. In other words, the scaling ratio (the ratio of the resolution of the scaled image to the resolution of the source image) has the same value in the vertical and horizontal directions. Because the scaled image is narrower than the native screen resolution (1366 x 768 pixels) of the display panel (area 10), two blank areas appear on the left and right side of the display screen (the shaded areas in Fig. 2).

In a second scaling example, schematically illustrated in Fig. 3, the source image is an image defined by the NTSC standard and has a native image resolution of 640 x 482 pixels (area 30). The source image is scaled (expanded) to a size of 1366 x 768 pixels, which does not preserve the aspect ratio of the source image. In other words, the scaling ratio has different values in the vertical and horizontal directions. As a result, the image is stretched horizontally. The scaled image has the same resolution as the display panel (1366 x 768 pixels) (area 10) and fills the entire screen.

In a third scaling example, the source image is a high-definition TV (HDTV) image defined by the ATSC standard and has a native image resolution of 1280 x 720 pixels. The source image is scaled (expanded) to a size of 1366 x 768 pixels, which preserves the aspect ratio of the source image. The scaled image fills the entire screen of the display panel, which has the same resolution as the scaled image.

In a fourth scaling example, the source image is an HDTV image defined by the ATSC standard and has a native image resolution of 1920 x 1080 pixels. The source image is scaled (reduced) to a size of 1366 x 768 pixels, which preserves the aspect ratio of the source image. The scaled image fills the entire screen of the display panel, which has the same resolution as the scaled image.

Similarly, scaling may be performed for any of the native source resolutions contained in the ATSC Standard. Descriptions of the various image resolutions contained the ATSC Standard may be found in ATSC A/53, ATSC Digital Television Standard, September 1995 (Annex A).

For other types of source images, scaling may be performed using the principles described above. The source images may be television images conforming to the DVB-T (Digital Video Broadcast - Terrestrial) standard as described in ETSI ETR 154, Digital Video Broadcasting: Implementation guidelines for the use of MPEG-2 Systems, Video and Audio in satellite, cable and terrestrial broadcasting applications, Third Edition, September 1997 (Annex A), which have a native image resolution of 1920 x 1080 pixels. The source images may also be television images conforming to the QAM (Quadrature Amplitude Modulation) standard for digital cable, which may have a native image resolution conforming to any of the defined ATSC or DVB-T resolutions; or television images conforming to the QPSK (Quardrature Phase Shift Keying) standard for uploading to the internet, which may have a native image resolution conforming to any of the defined ATSC or DVB-T resolutions. These source images may be scaled (expanded or reduced) to a size of 1366 x 768 pixels, which preserves the aspect ratio of the source image. The scaled image fills the entire screen of the display panel, which has the same resolution as the scaled image.

Source television images conforming to the PAL (Phase Alternating Line) or SECAM (Sequential Couleur Avec Memoire) standard have native resolutions (576 line) different from those of NTSC or ATSC, and image scaling ratios can be similarly calculated using the methods described above.

The methods in the above scaling examples use the entire resolution of the source image for scaling. In the cropping examples described below, the source image is cropped and then scaled. Such cropping removes artifacts that naturally occur or are inadvertently inserted in the production of television images prior to broadcast over the air, by cable, or by satellite. An example of such an artifact is the introduction of synchronization errors between cameras in a multiple camera venue.

In a first cropping example, schematically illustrated in Fig. 2, the source image is an NTSC image having a native image resolution of 640 x 482 pixels (area 30). First, the image is cropped by removing three lines (rows) from each of the top and bottom edges, and four columns from each of the left and right edges of the image. The resulting image (area 32) has 632 x 476 pixels and preserves the aspect ratio of the original image. The cropped image 32 is then scaled to a size of 1024 x 768 pixels, which preserves the aspect ratio of the source image. Note that the scale factor in this example is slightly different from that in the first scaling example. Again, because the scaled image is narrower than the native screen resolution (1366 x 768 pixels) of the display panel, two blank areas appear on the left and right side of the display screen.

In a second cropping example, the source image is the same as in the first cropping example and is cropped in the same way. The cropped image is scaled to a size of 1366 x 768 pixels, which does not preserve the aspect ratio of the source image. The scaled image fills the entire screen.

In a third cropping example, the source image is an HDTV image having a native image resolution of 1280 x 720 pixels. The image is cropped by removing four lines (rows) from each of the top and bottom edges, and eight columns from each of the left and right edges of the image. The resulting image has 1264 x 712 pixels. The cropped image is then scaled (expanded) to a size of 1366 x 768 pixels, which substantially preserves the proportion of the source image.

In an fourth cropping example, the source image is an HDTV image having a native image resolution of 1920 x 1080 pixels. The image is cropped by removing four lines (rows) from each of the top and bottom edges, and eight columns from each of the left and right edges of the image. The resulting image has 1904 x 1072 pixels and substantially preserves the aspect ratio of the original image. The cropped image is then scaled (reduced) to a size of 1366 x 768 pixels, which substantially preserves the proportion of the source image.

PAL, SECAM, DVB-T, QAM, and QPSK images can be cropped and scaled similarly using the methods described above.

Cropping the image as done in the above cropping examples has a similar effect as over-expanding the image, i.e., discarding an edge portion of the image, although the percentage is smaller than the percentage of over-expansion in a conventional method (less than 1% on each side in the above examples vs. an average of 2.5% overall over-expansion in the conventional method for High Definition TV images and 5% to 15% for NTSC/PAL/SECAM). Cropping is preferably done evenly on all edges, i.e., with the same percentage of the source image removed from all edges. Alternatively, different amount may be removed from the edges by cropping.

In the above described examples, the scaling ratios are chosen such that in at least one direction (the vertical direction in the examples) the screen is exactly filled, i.e. the resolution of the scaled image is the same as the native screen resolution in that direction. Alternatively, the resolution of the scaled image may be smaller than the native screen resolution in both the vertical and horizontal directions, although this is less preferred because the image will be smaller. Unlike the conventional over-expansion method, in embodiments of the present invention the scaled image is never larger than the native screen resolution in both directions.

In the above described examples, the scaling ratios are constants (uniform) across the screen in the horizontal direction and the vertical direction. Alternatively, scaling can be done with variable (non-uniform) scaling ratios across the screen in the horizontal and/or vertical directions. For example, in one scaling method, the aspect ratio of the original image is substantially preserved in the center one third to one half of the screen in the horizontal direction, and the remaining two thirds to one half of the screen is progressively scaled at higher scaling ratios as it gets closer to the right and left edges. This is sometimes referred to as panoramic scaling, and can be used when the aspect ratio of the original image is narrower in the horizontal direction than the aspect ratio of the screen.

The scaling and cropping examples described above are for a display panel having a native resolution of 1366 x 768 pixels. Scaling and cropping may be similarly performed for display panels having other resolutions based on the principles described above. Some other examples of display panel resolutions include 852 x 480, 1024 x 768, 1365 x 768, 1280 x 800, 1440 x 900, 1400 x 1050, 1680 x 1050, 1920 x 1080, 1920 x 1200, 2048 x 1536, 2560 x 1536, etc.

The image processing methods described above may be implemented in a television device by software, firmware or hardware (ICs, ASICs, etc.). Any suitable scaling and interpolation algorithms, either currently practiced or may be developed in the future, may be used in practicing the above described methods. The implementation is within the ability of those skilled in the relevant art and a more detailed description is omitted here.

Compared to the conventional methods of over-expanding the images, the scaling and cropping method according to embodiments of the present invention has the advantage that more of the source image can be seen. Another advantage is that cropping can be done in a controlled manner, and can be even on all edges or not even depending on the design. Conventional over-expansion method often results in random, uneven cropping in a non-controlled manner. In addition, conventional over-expansion method may result in close ratio scaling, i.e., scaling by a ratio that is within a few percentage points of 1, in certain circumstances. For example, when the native screen resolution and the native source image resolution are approximately the same, because the image must be scaled up by a few percents, the conventional over-expansion method would require a close ratio scaling of the source image, which results in undesirable image artifacts. The methods according to embodiments of the present invention, on the other hand, offer the option of not scaling the image in such a situation.

It will be apparent to those skilled in the art that various modification and variations can be made in the method and apparatus of the present invention without departing from the spirit or scope of the invention. Thus, it is intended that the present invention cover modifications and variations that come within the scope of the appended claims and their equivalents.

## Claims

1. A method of processing an image for display on a television screen having a native screen resolution, comprising:
receiving a source television image having a native image resolution;
scaling the source television image using a scaling ratio to produce a scaled television image having a resolution equal to or less than the native screen resolution in both a vertical and a horizontal direction; and
displaying the scaled television image on the television screen.

2. The method of claim 1, wherein the scaling ratio has the same value in the vertical and horizontal directions.

3. The method of claim 1, wherein the scaling ratio has different values in the vertical and horizontal directions.

4. The method of claim 1, wherein the scaling ratio has constant values across the television screen in the vertical and horizontal direction.

5. The method of claim 1, wherein the scaling ratio has variable values across the television screen in the vertical or horizontal direction.

6. The method of claim 1, wherein the resolution of the scaled television image is equal to the native screen resolution in a vertical direction.

7. The method of claim 1, wherein the resolution of the scaled television image is equal to the native screen resolution in the horizontal direction.

8. The method of claim 1, wherein the scaling ratio is such that the resolution of the scaled television image is equal to the native screen resolution in both a vertical and a horizontal direction.

9. The method of claim 1, wherein the native image resolution of the source television image is NTSC, PAL, or SECAM compliant.

10. The method of claim 1, wherein the native image resolution of the source television image is 1280 x 720 pixels.

11. The method of claim 1, wherein the native image resolution of the source television image is 1920 x 1080 pixels.

12. The method of claim 1, further comprising cropping the source television image before scaling it.

13. The method of claim 12, wherein cropping comprises removing the same number of lines from a top and a bottom edge of the source television image, and removing same number of lines from a left and a right edge of the source television image.

14. The method of claim 12, wherein cropping comprises removing different numbers of lines from a top and a bottom edge of the source television image, or removing different numbers of lines from a left and a right edge of the source television image.

15. A method of processing an image for display on a television screen having a native screen resolution, comprising:
receiving a source television image having a native image resolution;
cropping the source television image by removing one or more lines from one or more of a top, a bottom, a left and a right edge of the source television image;
scaling the cropped source television image using a scaling ratio to produce a scaled television image; and
displaying the scaled television image on the television screen.

16. The method of claim 15, wherein the cropping step removes the same number of lines from a top and a bottom edge of the source television image, and removing the same number of lines from a left and a right edge of the source television image.

17. The method of claim 15, wherein cropping comprises removing different numbers of lines from a top and a bottom edge of the source television image, or removing different numbers of lines from a left and a right edge of the source television image.

18. A computer readable medium carrying computer program code configured to control a computer to carry out a method according to any preceding claim.

19. An apparatus configured to carry out the method of any one of claims 1 to 17.
